# EUROPÄISCHE PATENTANMELDUNG

(11) **EP 1 308 843 A2**
(43) Veröffentlichungstag der Anmeldung: **07.05.2003**
(21) Anmeldenummer: 02024266.5
(22) Anmeldetag: 31.10.2002
(51) Int. Cl.: G06F 11/32

(54) **Verfahren zum Anzeigen von Fehlermeldungen bei einem Kleinrechner**

(30) Priorität: 02.11.2001 DE 10153998
(71) Anmelder: SIEMENS AKTIENGESELLSCHAFT, 80333 München (DE)
(72) Erfinder: Bechler, Klaus-Peter, 76287 Rheinstetten (DE); Giraud, Rene, 76344 Eggenstein-Leopoldshafen (DE)

(57) **Zusammenfassung**

Die Erfindung betrifft ein Verfahren zum Ausgeben einer Fehlermeldung beim Hochfahren eines Kleinrechners, wenn beim Selbsttest ein Fehler gefunden wird, wobei der Kleinrechner eine Audio-Schnittstelle, wenigstens einen Lautsprecher und einen nicht-flüchtigen BIOS-Speicher für das Abspeichern von Ein-/Ausgabe-Routinen umfasst.

Um ohne zusätzliche Hilfsmittel die Erkennung von Fehlern bei einem Rechner zu ermöglichen, sind in dem nicht-flüchtigen BIOS-Speicher mehrere Audio-Sequenzen abgelegt, die jeweils einer Fehlermeldung zugeordnet sind, und wird die zu dem beim Selbsttest gefundenen Fehler zugehörige Audio-Sequenz ausgewählt und über die Audio-Schnittstelle ausgegeben.

## Beschreibung

Die Erfindung betrifft ein Verfahren zum Anzeigen von Fehlermeldungen beim Hochfahren eines Kleinrechners, d. h. eines PCs, nach dem Oberbegriff von Anspruch 1.

Beim Hochfahren eines Rechners wird von dem Teil des Betriebssystems ein Selbsttest durchgeführt, der für die Einund Ausgabe zuständig ist. Dieser Teil des Betriebssystems wird im Weiteren BIOS genannt. Wenn beim Hochfahren Fehler erkannt werden, so wird zur Fehleranalyse eine Tonfolge ("Beeps") ausgegeben. Die Tonfolge hat dabei je nach erkanntem Fehler eine unterschiedliche Anzahl von Tönen. Zur richtigen Interpretation der Tonfolge muss sich der Benutzer des Rechners die Tonfolge merken und in einer Tabelle nachschlagen. Ein Beispiel einer solchen Tabelle ist in der folgenden Tabelle 1 wiedergegeben.

**Tabelle 1**

| Töne | Fehler |
|---|---|
| 1 | Refresh failure |
| 2 | Parity error |
| 3 | Base 64KB memory failure |
| 4 | Timer not operational |
| 5 | Processor error |
| 6 | 8042 - Gate A20 failure |
| 7 | Processor exception error |
| 8 | Display memory read/write error |
| 9 | ROM checksum error |
| 10 | CMOS shutdown register read/write error |
| 11 | Cache error |

Die Zuordnung des akustischen Signals zu dem vorliegenden Fehler erfordert einige Übung.

Ziel der vorliegenden Erfindung ist es daher, ein Verfahren anzugeben, mit dem ohne zusätzliche Hilfsmittel die Erkennung von Fehlern bei einem Rechner ermöglicht wird.

Diese Aufgabe wird gelöst durch das Verfahren nach An spruch 1. Bevorzugte Ausführungsformen sind Gegenstand der Unteransprüche.

Da die meisten PC mit einer Audio-Schnittstelle und Lautsprechern ausgestattet sind, kann über die Audio-Schnittstelle der Fehler auch gesprochen mitgeteilt werden. Die Erfindung nützt die Audio-Schnittstelle zur Fehlerausgabe. Im BIOS-EPROM werden Textfolgen in Audio-Codierung für die Ausgabe im Fehlerfall hinterlegt. Wird beim Selbsttest ein Fehler gefunden, so wird der zugehörige Audio-String ausgewählt und über die Audio-Schnittstelle ausgegeben. Um Speicherplatz zu sparen, wird bei der Codierung und später bei der Decodierung eine Sprachkomprimierung über einen Decodierer (Software- oder Hardware-Decodierer, wie z. B. GSM) durchgeführt.

Das erfindungsgemäße Verfahren zum Ausgeben einer Fehlermeldung beim Hochfahren eines Kleinrechners, wenn beim Selbsttest ein Fehler gefunden wird, wobei der Kleinrechner eine Audio-Schnittstelle, wenigstens einen Lautsprecher und einen nicht-flüchtigen BIOS-Speicher für das Abspeichern von Ein-/Ausgabe-Routinen umfasst, ist dadurch gekennzeichnet, dass in dem nicht-flüchtigen BIOS-Speicher mehrere Audio-Sequenzen abgelegt sind, die jeweils einer Fehlermeldung zugeordnet sind, und die zu dem beim Selbsttest gefundenen Fehler zugehörige Audio-Sequenz ausgewählt und über die Audio-Schnittstelle ausgegeben wird.

Insbesondere sind die Audio-Sequenzen komprimiert.

Bei einer bevorzugten Ausführungsform der Erfindung werden die Audio-Sequenzen über einen Software-Decodierer decodiert. Bei einer alternativen bevorzugten Ausführungsform der Erfindung werden die Audio-Sequenzen über einen Hardware-Decodierer decodiert.

Vorzugsweise arbeitet der Hardware- oder Software-Decodierer nach GSM.

Ein Vorteil der Erfindung ist es, dass der Fehler und die Fehlerart über den gesprochenen Text viel leichter erkannt und ausgewertet werden kann, auch von Personen, die in der Interpretation von Tonfolgen keine Übung haben. Es ist für die Fehlerausgabe auch nicht erforderlich, dass schon ein Großteil des Computers voll funktionsfähig ist. So braucht man z. B. noch keine Grafik und keinen Bildschirm. Es genügt, dass der Audio-Ausgang angesprochen werden kann. Je nach Art des Gerätes kann die Sprachausgabe über einen "Embedded Controller" (EC) oder über den Zentralprozessor (CPU) selbst erfolgen. Erfolgt die Ausgabe über den EC, so ist die Sprachausgabe selbst dann noch möglich, wenn die CPU selbst Fehler zeigt.

Weitere Merkmale und Vorteile der Erfindung ergeben sich aus der folgenden Beschreibung eines Ausführungsbeispiels.

Bei der Ausführungsform der Erfindung werden in dem Speicher, in dem die BIOS-Routinen des Betriebssystems abgelegt sind, mehrere Audio-Sequenzen gespeichert. Der BIOS-Speicher ist ein nicht-flüchtiger Speicher, vorzugsweise ein EPROM-(electronically programmable read only memory) Speicher, d. h. ein Speicher, der elektrisch programmiert wird und danach nur ausgelesen werden kann. Es kann aber ebenso gut ein EEPROM- (electronically erasable and programmable read only memory) Speicher verwendet werden, der elektrisch löschbar und programmierbar ist, im übrigen aber nur ausgelesen werden kann.

Die Audio-Sequenzen sind in der Art, wie es oben in der Tabelle dargestellt ist, jeweils einer Fehlermeldung zugeordnet. So wird anstelle von einer Folge von Piepstönen jeweils ein gesprochener Text über eine Audio-Schnittstelle des Rechners und einen Lautsprecher ausgegeben. Die Zuordnung von Fehler und gesprochenem Text bei einer bevorzugten Ausführungsform der Erfindung ist in der nachfolgenden Tabelle 2 zusammengestellt, wobei der Übersichtlichkeit halber in der Spalte links noch einmal die Anzahl der Töne in der Tonsequenz nach dem Stand der Technik wiedergegeben ist.

**Tabelle 2**

| Töne | Fehler | Behebung des Fehlers | Sprachausgabe |
|---|---|---|---|
| 1 | Refresh failure | Tausch der Hauptplatine | "Speicherauffrischung fehlerhaft, Austausch der Hauptplatine erforderlich" |
| 2 | Parity error | Tausch der Speichermodule | "Parity error, Austausch der Speichermodule erforderlich" |
| 3 | Base 64KB memory failure | Tausch der Speichermodule | "Basisspeicherfehler, Austausch der Speichermodule erforderlich" |
| 4 | Timer not operational | Tausch der Hauptplatine | "Timer-Fehler, Austausch der Hauptplatine erforderlich" |
| 5 | Processor error | Tausch des Prozessors | "Prozessorfehler, Austausch des Prozessors erforderlich" |
| 6 | 8042 - Gate A20 failure | Tausch der Hauptplatine | "Gate-Fehler, Austausch der Hauptplatine erforderlich" |
| 7 | Processor exception error | Interrupt des Prozessors | "Interrupt des Prozessors" |
| 8 | Display memory read/write error | Grafikkarte ein- oder ersetzen | "Grafikkarte fehlt oder ist defekt" |
| 9 | ROM checksum error | Tausch des BIOS-ROMs | "ROM-Fehler, Austausch des BIOS-ROM erforderlich" |
| 10 | CMOS shutdown register read/write error | Tausch der Hauptplatine | "CMOS-Schreiblesefehler, Austausch der Hauptplatine erforderlich" |
| 11 | Cache error | Tausch der CACHE-Module oder Tausch der Hauptplatine | "Cache-Modul defekt, Austausch der Cache-Module erforderlich" |

Die Tonfolgen in der linken Spalte werden dabei vorzugsweise nicht über den Lautsprecher ausgegeben. In einer besonderen Ausführungsform der Erfindung wird jedoch zusätzlich zu der Audio-Sequenz auch die Tonsequenz ausgegeben, so dass evtl. Zusatzinformation für den Benutzer des Rechners bereitgestellt werden kann.

In der Tabelle 2 sind in Zeile 4 und 11 Alternativen für die Sprachausgabe angegeben, die ausgewählt werden können je nach verwendeter Hardware des Rechners.

Um Speicherplatz im BIOS-EPROM zu sparen, werden die Audio-Sequenzen vorzugsweise komprimiert abgespeichert. Die Decodierung der Audio-Sequenzen erfolgt dann vorzugsweise über einen Decoder. Die Codierung der Audio-Sequenzen zur Abspeicherung kann in irgendeinem Rechner erfolgen.

Der Decodierer kann dabei auf Hardware oder auf Software basieren und arbeitet bevorzugt nach dem GSM-Protokoll. Durch letzteres wird erreicht, dass man auf Standard-Routinen bzw. -Bauelemente zurückgreifen kann, wodurch sich die Kosten bei der Umsetzung der Erfindung reduzieren lassen.

Darüber hinaus kann der Decodierer ein Teil eines Codec-Bauelements sein.

Insgesamt wird damit durch die Erfindung das Erkennen der Fehlerart erleichtert, wenn beim Selbsttest nach dem Einschalten Fehler entdeckt werden. Das erfindungsgemäße Verfahren ist darüber hinaus auch noch bei größeren Störungen im Gerät funktionsfähig.

## Patentansprüche

1. Verfahren zum Ausgeben einer Fehlermeldung beim Hochfahren eines Kleinrechners, wenn beim Selbsttest ein Fehler gefunden wird, wobei der Kleinrechner eine Audio-Schnittstelle, wenigstens einen Lautsprecher und einen nicht-flüchtigen BIOS-Speicher für das Abspeichern von Ein-/Ausgabe-Routinen umfasst, **dadurch gekennzeichnet,**
**dass** in dem nicht-flüchtigen BIOS-Speicher mehrere Audio-Sequenzen abgelegt sind, die jeweils einer Fehlermeldung zugeordnet sind, und
die zu dem beim Selbsttest gefundenen Fehler zugehörige Audio-Sequenz ausgewählt und über die Audio-Schnittstelle ausgegeben wird.

2. Verfahren nach Anspruch 1, **dadurch gekennzeichnet, dass** die Audio-Sequenzen komprimiert sind.

3. Verfahren nach einem der vorangehenden Ansprüche, **dadurch gekennzeichnet, dass** die Audio-Sequenzen über einen Software-Decodierer decodiert werden.

4. Verfahren nach einem der Ansprüche 1 oder 2, **dadurch gekennzeichnet, dass** die Audio-Sequenzen über einen Hardware-Decodierer decodiert werden.

5. Verfahren nach Anspruch 3 oder 4, **dadurch gekennzeichnet, dass** der Decodierer nach GSM arbeitet.
